# FASCICULE DE BREVET EUROPEEN

(11) **EP 3 369 799 B1**
(45) Date de publication et mention de la délivrance du brevet: **25.12.2019**
(21) Numéro de dépôt: 18158555.5
(22) Date de dépôt: 26.02.2018
(51) Int. Cl.: C10G 53/04, C10G 53/12, C10G 19/02, C10G 19/08

(54) **PROCÉDÉ AMÉLIORÉ DE RÉGÉNÉRATION D'UNE SOLUTION ALCALINE UTILISÉE DANS UN PROCÉDÉ D'EXTRACTION DE COMPOSÉS SOUFRÉS COMPORTANT UNE ÉTAPE DE LAVAGE**
VERBESSERTES VERFAHREN ZUR REGENERATION EINER ALKALINEN LÖSUNG, DIE BEI EINEM EXTRAKTIONSVERFAHREN VON SCHWEFELVERBINDUNGEN EINGESETZT WIRD, DAS EINE REINIGUNGSPHASE VORSIEHT
IMPROVED METHOD FOR REGENERATING AN ALKALINE SOLUTION USED IN A METHOD FOR EXTRACTING SULPHUROUS COMPOUNDS COMPRISING A WASHING STEP

(30) Priorité: 01.03.2017 FR 1751678
(43) Date de publication de la demande: 05.09.2018
(73) Titulaire: AXENS, 92508 Rueil-Malmaison Cedex (FR)
(72) Inventeur: BESNAULT, Jean-Michel, 78110 le Vesinet (FR); FERRERO, Sebastien, 92370 Chaville (FR); DO, Mai Phuong, 50480 Kuala Lumpur (MY)
(74) Mandataire: IFP Energies nouvelles

(56) Documents cités:
- WO-A1-2005/121279
- FR-A- 1 249 134
- FR-A- 1 254 713
- US-A- 5 354 482
- US-A1- 2003 072 707
- US-A1- 2014 284 250

## Description

L'invention concerne le domaine de l'extraction des composés soufrés tels que les mercaptans, le COS, l'H₂S ou le CS₂ d'une coupe hydrocarbonée. Cette extraction sélective est réalisée en mettant en contact la coupe hydrocarbonée en phase liquide avec une solution alcaline, par exemple de la soude, pour former des espèces de type mercaptides et des sels. Après extraction, la solution alcaline chargée en mercaptides est régénérée.

La régénération de la solution alcaline consiste en une réaction d'oxydation exothermique en présence d'un catalyseur convertissant les espèces de type mercaptides en disulfures. Lesdits disulfures constituent une phase hydrocarbure peu soluble dans la solution alcaline. La séparation des effluents du réacteur produit d'une part une solution alcaline partiellement régénérée, d'autre part une phase hydrocarbure riche en disulfures.

La solution alcaline partiellement régénérée peut être utilisée directement à nouveau dans la section extraction, ou bien peut être traitée pour en extraire les disulfures résiduels qu'elle contient avant d'être introduite à nouveau à l'extracteur.

Le procédé selon l'invention consiste à améliorer le procédé de régénération de la solution alcaline, en diminuant l'excès de solution alcaline utilisée pour contrôler la montée en température due à la réaction d'oxydation. Le procédé selon l'invention permet ainsi de diminuer la quantité de solution alcaline dans la section de régénération et donc, de réduire l'investissement, les coûts opératoires, l'inventaire de solution alcaline et de catalyseur dans la section régénération. Au final le procédé selon l'invention permet d'augmenter l'efficacité énergétique du procédé.

Les procédés d'élimination des mercaptans sont utilisés en raffinerie pour les coupes hydrocarbonées comprenant essentiellement des coupes légères allant du méthane jusqu'à la coupe kérosène afin de les transformer en produits valorisables. En effet, la présence de mercaptans rend l'hydrocarbure odorant et instable avec une tendance à former du sulfure d'hydrogène. Les mercaptans se rencontrent dans un grand nombre de charges hydrocarbonées, parmi lesquelles on peut citer les charges issues de la distillation du pétrole brut, par exemple des GPL, naphta, essences ou kérosène, ou des charges issues de l'extraction de gaz de champs ou de l'extraction d'huile de schiste. En outre, les charges concernées peuvent également être issues d'unité de craquage. Cette liste n'est pas exhaustive.

### DESCRIPTION SOMMAIRE DES FIGURES

La figure 1 représente le schéma de la section de régénération de la solution alcaline usée issue de la section d'extraction des composés soufrés selon l'art antérieur.
La figure 2 représente le schéma de la section de régénération de la solution alcaline usée issue de la section d'extraction selon l'invention dans une première variante.
La figure 3 représente le schéma de la section de régénération de la solution alcaline usée issue de la section d'extraction selon l'invention dans une deuxième variante.
La figure 4 représente le schéma de la section de régénération de la solution alcaline usée issue de la section d'extraction selon l'invention dans une troisième variante.

### EXAMEN DE L'ART ANTERIEUR

L'extraction des composés soufrés d'une coupe hydrocarbure (essence, GPL...) par extraction liquide-liquide avec une solution alcaline est bien connue dans l'état de la technique. Lorsque la majorité des espèces soufrées sont des mercaptans, ou thiols, un type de procédé très répandu consiste à réaliser une extraction préférentiellement à contre-courant des espèces soufrées à l'aide d'une solution alcaline aqueuse, en général de la soude, tournant en boucle dans le procédé, comme décrit dans le brevet US 4,081,354.

La solution alcaline sortant de la section extraction est appelée solution alcaline enrichie en composés soufrés et est envoyée vers la section de régénération. Nous l'appelons dans la suite du texte solution alcaline à régénérer ou solution alcaline usée.

Dans la section régénération, la solution alcaline à régénérer est mise en contact dans le réacteur d'oxydation avec un agent oxydant, en général de l'air ou de l'oxygène pur, ou un gaz oxydant, en présence d'un catalyseur dissous, par exemple à base de phtalocyanine de cobalt pour convertir les espèces de type mercaptides en disulfures.

Les mercaptides peuvent se définir de manière générale comme des sels de mercaptan contenant l'ion RS-, où R est un groupe alkyl ou aryl.

Les paramètres associés à la réaction d'oxydation sont choisis de manière à oxyder la quasi-totalité des mercaptides présents dans la solution alcaline en disulfures qui sont peu solubles dans la phase alcaline. De façon optionnelle, la solution alcaline peut être mise en contact simultanément dans le réacteur d'oxydation avec une coupe hydrocarbonée, dans laquelle se dissolvent les disulfures formés par la réaction.

La réaction d'oxydation est exothermique et la température du fluide procédé dans le réacteur d'oxydation doit être maîtrisée. Dans les procédés selon l'art antérieur, le moyen de refroidissement utilisé est une ligne permettant de recirculer au moins une partie de la solution alcaline régénérée de la sortie de la section de régénération à l'entrée de la section de régénération, « bypassant », c'est-à-dire contournant entièrement la section d'extraction. Ainsi un excès de solution alcaline régénérée alimente le réacteur d'oxydation et est utilisée pour absorber une partie de la chaleur dégagée par la réaction d'oxydation, ce qui permet de contrôler la montée en température dans le réacteur d'oxydation.

Dans la suite du texte, on appellera « excès de solution alcaline » la quantité de solution alcaline utilisée pour contrôler la montée en température dans le réacteur et éventuellement, « excès de solution alcaline recirculé » quand la solution alcaline utilisée pour contrôler la montée en température du réacteur provient d'une ligne de recirculation interne à la section de régénération.

Lorsque la teneur en composés soufrés dans la charge augmente, l'excès de solution alcaline utilisé pour absorber les calories dégagées par la réaction d'oxydation augmente et devient relativement importante comparée à la quantité de solution alcaline usée provenant de l'extraction.

L'excès de solution alcaline utilisé dans le réacteur d'oxydation a un impact sur la quantité totale de solution alcaline circulant dans la section de régénération, et notamment dans la section de lavage. Cette quantité totale influe sur l'inventaire de solution alcaline dans la section de régénération, donc sur le cout des investissements et le coût des opérations.

Le brevet US 9,422,483 propose de remplacer le lavage avec un hydrocarbure, dernière étape optionnelle de la régénération de la solution alcaline à régénérer, par une étape d'extraction dans une colonne d'extraction mettant en contact un hydrocarbure distinct de la charge à traiter, suivie d'une étape d'oxydation des disulfures. Ce brevet divulgue une solution alternative au lavage avec un hydrocarbure.

Le document WO 2005/121279 A1 divulgue un appareil et procédé d'extraction de composés sulfurés d'un flux hydrocarboné.

Aucun des documents de l'art antérieur ne divulgue de solution permettant de réduire l'excès de solution alcaline régénérée, tout en conservant une exo thermicité identique dans le réacteur d'oxydation.

L'invention diffère de l'art antérieur en ce que :
- le débit de solution alcaline dans la section de régénération est réduit comparé à l'art antérieur
- la taille des équipements est réduite, l'investissement est minimisé et la performance énergétique du procédé améliorée.
- la quantité de coupe hydrocarbonée nécessaire pour la section de lavage de la solution alcaline est réduite, ce qui diminue la consommation de cette coupe et l'impact sur l'unité aval qui la retraite une fois chargée en composés soufrés.
- l'inventaire de solution alcaline de l'unité est réduit, ce qui réduit la consommation et la purge en solution alcaline lors des phases transitoires par exemple, le démarrage et l'arrêt de l'unité.
- l'inventaire de catalyseur de l'unité est réduit, ce qui réduit la consommation et la purge de catalyseur lors des phases transitoires, par exemple, le démarrage et l'arrêt de l'unité.
- Selon les variantes de l'invention, le contrôle de l'exothermicité dans le réacteur d'oxydation est amélioré.

### DESCRIPTION SOMMAIRE DE L'INVENTION

Le principe de la présente invention consiste à améliorer le procédé de régénération de la solution alcaline, en réduisant l'excès de solution alcaline recirculée, tout en conservant une exothermicité identique dans le réacteur d'oxydation de ladite section de régénération.

Selon l'invention, on utilise préférentiellement comme moyen de refroidissement pour contrôler la température au réacteur d'oxydation, un excès de solution alcaline recirculé constitué par de la solution alcaline partiellement régénérée. Ladite solution partiellement régénérée est appauvrie en mercaptides, mais contient des disulfures résiduels. Par exemple, il peut s'agir de solution alcaline telle qu'elle sort du réacteur d'oxydation, après séparation de la phase hydrocarbure riche en disulfures et refroidissement.

En effet, à la sortie du réacteur d'oxydation, la phase alcaline est séparée de la phase hydrocarbure riche en disulfure. Ladite phase est constituée soit des disulfures uniquement, soit d'une coupe hydrocarbonée riche en disulfures, si une coupe hydrocarbonée a été simultanément injectée dans le réacteur d'oxydation conduisant à la dissolution des disulfures dans cette coupe.

La solution alcaline, issue de la séparation, ne contient plus de mercaptides mais des disulfures résiduels de l'ordre de 200 ppm (poids). On l'appelle solution alcaline partiellement régénérée, ou, dans le cas où la solution alcaline est de la soude, soude partiellement régénérée.

Après séparation, ladite solution alcaline partiellement régénérée est refroidie puis subit un traitement permettant de réduire sa teneur en disulfures résiduels.

Ce traitement consiste typiquement en une mise en contact avec une coupe hydrocarbonée ne contenant pas de composés soufrés, typiquement un hydrocarbure désulfurisé telle qu'une coupe naphta ou une coupe essence désulfurisée. Le mélange obtenu est ensuite séparé en une phase hydrocarbure et une phase aqueuse dans un ballon de lavage ou un moyen de séparation équivalent. La phase aqueuse constitue la solution alcaline totalement régénérée et la phase hydrocarbure est une coupe hydrocarbonée partiellement enrichie en composés soufrés qui peut être envoyée au réacteur d'oxydation.

La section mettant en œuvre ledit traitement est nommé typiquement section de lavage.

La solution alcaline sortant de la section régénération est appelée solution alcaline régénérée ou solution alcaline appauvrie en composés soufrés (« Lean caustic » selon la terminologie anglo-saxonne). Nous l'appelons dans la suite du texte solution alcaline régénérée, ou plus précisément, solution alcaline totalement régénérée.

Selon l'invention, l'excès de solution alcaline partiellement régénérée recirculée vers le réacteur d'oxydation (4) pour contrôler la montée en température, est généralement disponible à une température inférieure ou égale à 45°C, typiquement entre 10° et 45°C, préférentiellement entre 35°C et 45°C, en aval de du moyen de refroidissement (14), typiquement un échangeur.

En général, la purge de solution alcaline partiellement régénérée et l'appoint de solution alcaline fraîche correspondant sont réalisés en amont du refroidissement (14). Cet appoint et cette purge peuvent être soit continus soit intermittents. L'excès de solution alcaline recirculé peut donc aussi être un mélange de solution alcaline fraîche et de solution alcaline partiellement régénérée.

Selon une première variante de l'invention, un excès de solution alcaline recirculé (21a) est envoyé vers le réacteur d'oxydation, par le circuit alimentant le réacteur, soit en amont de l'échangeur de préchauffe (2) de la solution alcaline à régénérer dans la conduite (1a) sortant de la section d'extraction, soit en aval (1b) et (1c) de l'échangeur(2). L'excès de solution alcaline recirculé est donc envoyé vers le réacteur d'oxydation en mélange avec la solution alcaline usée à régénérer.

Selon cette première variante, la quantité totale de solution alcaline présente dans le réacteur d'oxydation (4) est réduite comparée à l'art antérieur, ainsi que l'inventaire de solution alcaline dans toute la section de régénération. De plus, la section de lavage ne traite que la solution alcaline qui doit être utilisée à la section extraction et voit donc sa taille et ses coûts opératoires diminués.

Selon une deuxième variante de l'invention, un excès de solution alcaline (22a) est envoyé vers le réacteur d'oxydation (4), directement en un ou plusieurs points dudit réacteur.

Chaque point d'injection peut avantageusement être équipé d'un dispositif de distribution, telle qu'une rampe d'injection, ou éventuellement un dispositif de mélange, type boite de trempe. On parle de boite de « quench »dans la terminologie anglo saxonne. Un dispositif de distribution permet de distribuer de façon homogène l'excès de solution alcaline dans le réacteur. Un dispositif de mélange permettra, en outre, de mélanger l'excès de solution alcaline et le flux contenu dans le réacteur. Chaque point d'injection peut être muni d'un autre type de dispositif équivalent. Le réacteur d'oxydation peut être muni d'un ou plusieurs thermocouples ou de tout moyen équivalent pour mesurer la température, afin d'ajuster le ou les débits d'excès de solution alcaline à introduire en chacun des points d'injection, suivant une loi permettant de contrôler la montée en température dans le réacteur.

Le débit d'injection de solution alcaline recirculée peut être contrôlé en utilisant les mesures de température située en amont et en aval du réacteur d'oxydation.

Selon cette variante de l'invention, l'excès de solution alcaline injectée dans le réacteur peut provenir d'une recirculation de solution alcaline ou bien d'un flux provenant de l'extérieur de la section de régénération.

Selon une troisième variante de l'invention, le réacteur d'oxydation est muni d'un moyen de refroidissement supplémentaire, typiquement un équipement (23), permettant de refroidir directement le flux en circulation dans le réacteur d'oxydation (4) de manière à réduire encore l'excès de solution alcaline utilisé.

Cet équipement (23) peut être typiquement un échangeur ou tout moyen équivalent, par exemple, un échangeur latéral, une épingle ou un serpentin implanté dans le réacteur, un reflux circulant, une double enveloppe autour du réacteur. Cette liste n'est pas exhaustive. Le fluide de refroidissement peut être un flux interne à l'unité, ou un flux externe à l'unité ou une utilité froide, par exemple l'eau, ou un fluide réfrigérant spécifique. Cette troisième variante est compatible avec la première et la seconde variante de la présente invention.

Selon une autre variante de l'invention, l'excès de solution alcaline recirculé peut être refroidi, par un moyen de refroidissement supplémentaire tel qu'un échangeur additionnel ou tout autre équipement équivalent, à une température inférieure d'au moins 5°C à celle de la solution alcaline partiellement régénérée refroidie (15), typiquement à une température comprise entre 10°C et 40°C, préférentiellement entre 10°C et 35°C.

Enfin, selon une autre variante de l'invention, l'excès de solution alcaline est remplacé par un apport d'un excès d'agent oxydant, par exemple de l'air ou de l'oxygène en amont ou directement dans le réacteur d'oxydation (4) par au moins un point d'injection.

Les différentes variantes de l'invention peuvent être combinées lors du design de l'unité. Elles peuvent être opérées simultanément ou alternativement. Ainsi l'unité peut être munie, d'une part, d'une ligne de recirculation permettant d'envoyer un excès de solution alcaline recirculé dans le circuit en amont du réacteur d'oxydation et, d'autre part, d'une ligne de recirculation permettant d'envoyer un excès de solution alcaline recirculé en un ou plusieurs points du réacteur d'oxydation. Quelle que soit la variante de l'invention, le réacteur d'oxydation (4) peut être muni d'un moyen de refroidissement (23).

Selon l'invention, pour une montée en température identique dans le réacteur d'oxydation, l'excès de solution alcaline dans la section de régénération, est réduit comparé à l'art antérieur, ce qui permet de minimiser l'investissement nécessaire pour construire ces unités, et d'améliorer l'efficacité énergétique du procédé et donc les coûts opératoires correspondants.

L'invention peut être utilisée avantageusement dans le cadre d'un « dégoulottage » d'unité, c'est-à-dire d'une augmentation de sa capacité de production.

En résumé l'invention peut se définir comme un procédé de régénération de solution alcaline usée utilisée dans une unité d'extraction des composés soufrés d'une coupe hydrocarbonée, comprenant la suite d'étapes suivantes :
a) On envoie la solution alcaline usée (1a) dans un réacteur d'oxydation (4) dans lequel elle est mise en contact avec un agent oxydant (5) et un catalyseur (3), ladite solution alcaline usée étant préalablement réchauffée au moyen d'un échangeur (2) à une température comprise entre 40°C et 50°C.
b) On envoie les effluents (7) du réacteur d'oxydation (4) dans un séparateur (8) duquel on extrait une phase hydrocarbure riche en disulfures (10), et une solution alcaline partiellement régénérée (11),
c) On refroidit la solution alcaline partiellement régénérée (11) issue de l'étape b) à une température inférieure ou égale à 45°C,),
d) On divise la solution alcaline partiellement régénérée refroidie (15) à l'étape c) en deux flux :
   - un flux constituant l'excès de solution alcaline recirculé qui est envoyé en amont (21a), ou directement (21b), dans le réacteur d'oxydation (4), et qui constitue le moyen de refroidissement utilisé pour contrôler la montée en température dudit réacteur, et,
   - un flux (21b) ou (22b) qui poursuit le processus de régénération,
e) On mélange le flux (21b) ou (22b), issu de l'étape d) avec une coupe hydrocarbonée sans composés soufrés (16),
f) On envoie le mélange issu de l'étape e) dans un séparateur (18) duquel on extrait une solution alcaline totalement régénérée (19), et une coupe hydrocarbonée enrichie partiellement en disulfures (6).

Selon une première variante préférée du procédé de régénération selon l'invention, l'excès (21a) de solution alcaline recirculé est envoyé vers le réacteur d'oxydation (4), par le circuit en amont dudit réacteur d'oxydation (4), en mélange avec la solution alcaline usée (1a).

Selon une autre variante préférée du procédé de régénération selon l'invention, l'excès (22a) de solution alcaline recirculé est envoyé vers le réacteur d'oxydation (4), directement en un ou plusieurs points dudit réacteur d'oxydation (4).

Selon une autre variante préférée du procédé de régénération selon l'invention, le ou les points d'introduction de l'excès de solution alcaline recirculé dans le réacteur d'oxydation (4) sont munis d'un moyen de diffusion ou d'un moyen de mélange.

Selon une autre variante préférée du procédé de régénération selon l'invention, le ou les points d'introduction de l'excès de solution alcaline recirculé dans le réacteur d'oxydation (4) sont positionnés de façon à permettre de contrôler la montée en température du réacteur d'oxydation (4).

Généralement, le catalyseur employé dans le réacteur d'oxydation est de type phtalocyanines de cobalt ou de vanadium.

Généralement, le catalyseur employé dans le réacteur d'oxydation est ajouté dans la solution alcaline à l'entrée du réacteur d'oxydation de manière à atteindre une concentration en catalyseur dans la solution alcaline comprise entre 10 et 1 000 ppm poids, préférentiellement comprise entre 10 et 500 ppm poids.

Selon une autre variante préférée du procédé de régénération selon l'invention, le réacteur d'oxydation (4) est équipé d'un moyen de refroidissement (23).

Selon une autre variante préférée du procédé de régénération selon l'invention, l'excès de solution alcaline recirculé (21a) ou (22a) est refroidi à une température inférieure d'au moins 5°C à celle de la solution alcaline partiellement régénérée, avant d'être renvoyé vers le réacteur d'oxydation (4).

Dans le procédé de régénération selon la présente invention, la coupe hydrocarbonée traitée dans l'unité d'extraction des composés soufrés peut généralement aller du méthane au kérosène.

L'installation de régénération d'une solution alcaline usée utilisée dans une unité d'extraction des composés soufrés d'une coupe hydrocarbonée, selon l'invention, comprend au moins :
- un équipement (2) permettant de chauffer la solution alcaline usée avant son introduction au réacteur d'oxydation à une température comprise entre 40°C et 50°C,
- un réacteur d'oxydation (4), dans lequel la solution alcaline usée est mise en contact avec un agent oxydant (5) et un catalyseur (3),
- un séparateur (8) alimenté par l'effluent issu du réacteur d'oxydation (4), duquel on extrait une phase hydrocarbure riche en disulfures (10), et une solution alcaline partiellement régénérée (11),
- un moyen de refroidissement (14) permettant de refroidir la solution alcaline partiellement régénérée (11) issue du séparateur à une température inférieure ou égale à 45°C
- un moyen permettant la division en deux flux de la solution alcaline partiellement régénérée refroidie (15) :
- un flux constituant l'excès de solution alcaline recirculé qui est envoyé en amont (21a), ou directement (22a), dans le réacteur d'oxydation (4), et,
- un flux (21b) ou (22b) qui poursuit le processus de régénération
- un moyen de refroidissement constitué par l'excès de solution alcaline recirculé qui est envoyé en amont (21a), ou directement (22a), dans le réacteur d'oxydation (4),
- un moyen de mélange du flux (21b) ou (22b), avec une coupe hydrocarbonée sans composés soufrés (16),
- un séparateur (18) alimenté par le mélange, duquel on extrait une solution alcaline totalement régénérée (19), et une coupe hydrocarbonée enrichie partiellement en disulfures (6).

Selon une première variante préférée de l'installation de régénération de solution alcaline usée selon l'invention, le réacteur d'oxydation est équipé d'un moyen de refroidissement supplémentaire (23).

Selon une autre variante préférée de l'installation de régénération de solution alcaline usée selon l'invention, un moyen de refroidissement supplémentaire permet de refroidir l'excès de solution alcaline recirculé (21a) ou (22a) à une température inférieure d'au moins 5°C à celle de la solution alcaline partiellement régénérée refroidie (15)

### DESCRIPTION DETAILLEE DE L'INVENTION

La présente invention concerne un procédé d'extraction de composés soufrés présents dans une coupe hydrocarbure, dans le cas où les espèces soufrées majoritaires sont des mercaptans, notés RSH, par exemple méthanethiol CH₃SH, éthanethiol C₂H₅SH, propanethiol C₃H₇SH, et où d'autres espèces soufrées peuvent être également présentes, comme le sulfure d'hydrogène H2S ou l'oxysulfure de carbone COS.

La charge de solution alcaline usée à traiter est alimentée en continu à la section de régénération et renvoyée en continu à la section d'extraction. Elle peut éventuellement provenir de différentes sections d'extraction distinctes et y retourner après régénération. Dans la section de régénération, la solution alcaline est apportée et purgée soit de façon discontinue (procédé par batch ou discontinu) soit de façon permanente (procédé continu) afin de maintenir sa qualité constante.

Cette partie de la description fournit des informations sur la section d'extraction qui n'est pas l'objet de la présente invention, mais permet de mieux la comprendre.

La charge à traiter, comprenant des composés soufrés, peut entrer d'abord dans une section de prétraitement constituée par exemple d'une enceinte de prétraitement préremplie d'une solution alcaline, typiquement de la soude diluée à une concentration comprise entre 2 et 10% poids.

La solution alcaline dans l'enceinte de prétraitement est renouvelée selon un cycle de fonctionnement compris entre 3 et 30 jours, en fonction de l'âge de la solution. Le prétraitement extrait une quantité variable d'espèces soufrées, dont des mercaptans. Suivant les unités, il est possible d'avoir des schémas différents de prétraitement avec, par exemple, au moins deux prétraitements opérant en parallèle ou encore un système d'appoint purge continu sur cette section. Cette liste est non exhaustive.

La charge hydrocarbonée entre ensuite dans une section d'extraction, classiquement une colonne d'extraction à contrecourant. La coupe hydrocarbonée est alimentée en fond de colonne. Ladite colonne d'extraction est également alimentée par une solution alcaline régénérée, typiquement de la soude, en tête de colonne. La concentration en soude est alors comprise entre 5% et 25% en poids, préférentiellement entre 13 et 17% poids. La solution alcaline peut également contenir des solvants organiques polaires, par exemple de type dialkyl sulfoxide, amino-alcools, amino-hydroxy-alkyl ethers, alkylamines, alkylpolyamines, alkylamides, seuls ou en mélange. La solution alcaline peut contenir, plus généralement, des hydroxydes de métaux alcalins, mais aussi des hydroxydes de métaux alcalino-terreux et des bases faibles.

La section d'extraction a pour fonction d'extraire la majorité des mercaptans présents dans la charge hydrocarbure. En effet, les mercaptans forment des mercaptides en présence de la solution alcaline qui se dissolvent préférentiellement dans la solution alcaline aqueuse et sont par conséquent extraits de la charge hydrocarbure. La charge hydrocarbure ainsi raffinée sort de la colonne en tête de colonne.

La solution alcaline sortant de la section d'extraction est chargée en mercaptides, par exemple en espèces de types thiolates de sodium RS-Na, correspondant aux mercaptans extraits, dissociés et recombinés avec les ions sodium Na+ si la solution alcaline est de la soude.

L'oxydation de la solution alcaline chargée en mercaptides sortant de l'extraction peut être réalisée dans différents types d'équipements appelés réacteur d'oxydation. Ledit réacteur est généralement un ballon vertical alimenté par le fond, conçu de manière à mettre en contact l'agent oxydant, généralement gazeux avec la solution alcaline chargée en mercaptides en phase liquide, et éventuellement avec une phase hydrocarbure, en phase liquide également.

La technologie souvent rencontrée pour le réacteur d'oxydation est celle d'une colonne à garnissage, par exemple avec des anneaux Raschig ou des anneaux Pall ou d'autres types de garnissage. La réaction d'oxydation est exothermique et la température du fluide procédé dans le réacteur d'oxydation doit être maîtrisée. En effet, une température minimale est nécessaire pour que la réaction d'oxydation soit amorcée. Cependant, la température du procédé doit être contrôlée pour se situer dans la plage de fonctionnement optimale.

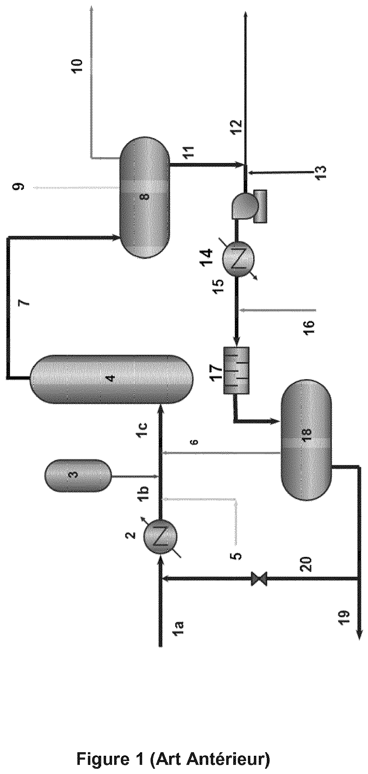

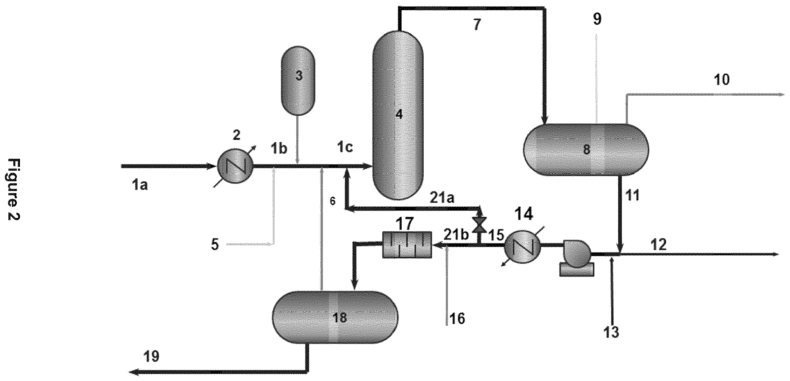

Les figures jointes sont des schémas de la section de régénération selon l'art antérieur (figure 1) et selon l'invention dans ses différentes variantes (figures 2, 3 et 4).

Les flux ou équipements qui ont la même signification dans l'art antérieur et selon la présente invention portent le même numéro.

La figure 1 illustre le schéma de la section de régénération selon l'art antérieur.

Le flux de solution alcaline à régénérer (1a) est chauffé typiquement entre 40 et 50°C, et préférentiellement entre 42 et 47°C dans un échangeur (2), en général à la vapeur industrielle, ou dans un équipement équivalent, avant l'ajout d'air par la conduite (5) et de catalyseur par la conduite (3) puis le flux (1c) entre dans un réacteur d'oxydation (4). La présence d'un catalyseur dissous (3) dans la solution alcaline promeut la réaction d'oxydation des mercaptides en disulfures notés RSSR'. Le catalyseur utilisé peut être de la famille des phtalocyanines. Les phtalocyanines de métaux comme le cobalt, le fer, le manganèse, le molybdène ou le vanadium peuvent être employés.

De façon préférentielle, les phtalocyanines de cobalt ou de vanadium sont utilisées. Comme les phtalocyanines métalliques ne sont pas solubles dans le milieu aqueux, leurs dérivés sulfonatés tels que le trisulfonate ou le tetrasulfonate de phtalocyanine sont généralement utilisés dans le réacteur d'oxydation.

D'autres catalyseurs sont également utilisables. Le catalyseur est ajouté dans la solution alcaline à l'entrée du réacteur d'oxydation de manière à atteindre une concentration en catalyseur dans la solution alcaline comprise entre 10 et 1 000 ppm poids, préférentiellement entre 10 et 500 ppm poids. Les disulfures sont insolubles dans la phase alcaline. Le flux hydrocarboné provenant du ballon de lavage (18) est injecté dans la solution alcaline usée, par exemple en amont du réacteur d'oxydation (4), par la conduite (6) dans le flux (1b). Ce flux hydrocarboné concentre les disulfures produits pendant la réaction d'oxydation.

La pression en tête du réacteur d'oxydation est comprise entre 0,1 et 1,0 MPa, de manière préférée entre 0,45 et 0,65 MPa.

Le milieu polyphasique sortant du réacteur d'oxydation (4) par la conduite (7) est envoyé vers un ballon séparateur (8) (« Disulfures Separator Drum » dans la terminologie anglo-saxonne). Le ballon séparateur (8) peut être remplacé par tout moyen physique de séparation entre une phase gaz, une phase hydrocarbure et une phase aqueuse. Dans ledit ballon, sont séparées une phase gaz, une phase hydrocarbure riche en espèces soufrées de type disulfures qui est purgée par la conduite (10), et une phase de solution alcaline partiellement régénérée (11) contenant une quantité de disulfures résiduels, typiquement de l'ordre de 200 ppm poids. L'excès d'agent oxydant appauvri en oxygène sort du ballon séparateur (8) par la conduite (9).

Une partie de la solution alcaline partiellement régénérée (11) est purgée par la conduite (12) pour maintenir constante la concentration de la solution alcaline afin de maintenir la qualité de l'extraction. En effet, une partie de la solution alcaline est consommée par des réactions secondaires produisant notamment des sels, par exemple des sels de Na₂CO₃ et de Na₂S. L'appoint de solution alcaline fraiche correspondant est réalisé par la conduite (13).

Après purge et appoint, la solution alcaline partiellement régénérée est ensuite refroidie par un moyen de refroidissement (14), typiquement un échangeur fonctionnant avec de l'eau de refroidissement ou un équipement équivalent, comme, par exemple, un aéro-réfrigérant ou un échangeur utilisant un autre fluide réfrigérant que l'eau industrielle, à une température inférieure ou égale à 45°C, préférentiellement comprise entre 35°C et 45°C, puis est envoyée vers la section de lavage.

La section de lavage traite ensuite la solution alcaline partiellement régénérée refroidie (15) pour en extraire les disulfures résiduels. Ladite section est constituée classiquement d'une injection d'une coupe hydrocarbonée (16) ne contenant pas de composés soufrés, généralement un hydrocarbure de type naphta ou une coupe essence ayant été désulfurisée au préalable. Optionnellement, un mixeur en ligne (17) permet de bien mettre en contact la solution alcaline partiellement régénérée et l'hydrocarbure propre (16). Ensuite, les deux fluides sont séparés dans un ballon séparateur appelé ballon de lavage (18). Ledit ballon de lavage peut être remplacé par tout moyen physique de séparation entre une phase hydrocarbure et une phase aqueuse. La solution alcaline totalement régénérée (19) peut être envoyée à la section extraction, et la coupe hydrocarbonée partiellement enrichie en disulfures peut être envoyée vers l'alimentation du réacteur d'oxydation par la ligne (6). Suivant les unités, il est possible d'avoir des schémas différents de section de lavage avec, par exemple, plusieurs sections de lavage opérant en série.

La solution alcaline totalement régénérée sortant de la section de lavage est divisée en deux flux :
- un flux (19) qui peut être renvoyé à la section extraction, et
- un flux (20) qui est envoyé à l'entrée de la section de régénération, « bypassant », c'est-à-dire contournant entièrement la section d'extraction.

Le flux (20) constitue un excès de solution alcaline totalement régénérée qui alimente le réacteur d'oxydation et qui est utilisé comme moyen de refroidissement pour absorber une partie de la chaleur dégagée par la réaction d'oxydation, et permettre de contrôler la montée en température dans dudit réacteur.

La figure 2 illustre une première variante du procédé selon l'invention. Le procédé selon l'invention fait disparaitre la ligne de recirculation de solution alcaline totalement régénérée (20) dont le point de départ dans l'art antérieur est situé, à la sortie de la section régénération, en aval du ballon de lavage (18) conformément à la figure 1. Selon l'invention, l'excès de solution alcaline recirculé, constitué par de la solution alcaline partiellement régénérée refroidie (15), est prélevé, en aval de l'échangeur (14) et en amont du ballon de lavage (18). Ledit excès est renvoyé vers le réacteur d'oxydation (4), en mélange avec le flux de solution alcaline usée, par la nouvelle ligne de recirculation (21a). C'est-à-dire que ladite nouvelle ligne de recirculation (21a) permet d'injecter l'excès de solution alcaline dans le circuit en amont du réacteur d'oxydation (4). Le point d'arrivée de ladite ligne peut être placé également en amont de l'échangeur de préchauffe (2) dans la conduite (1a) ou en aval de celui-ci dans les conduites (1b) et (1c). Le débit dans cette ligne (21a) est ajusté en fonction de l'augmentation de température dans le réacteur d'oxydation (4), afin de contrôler la montée en température dans celui-ci.

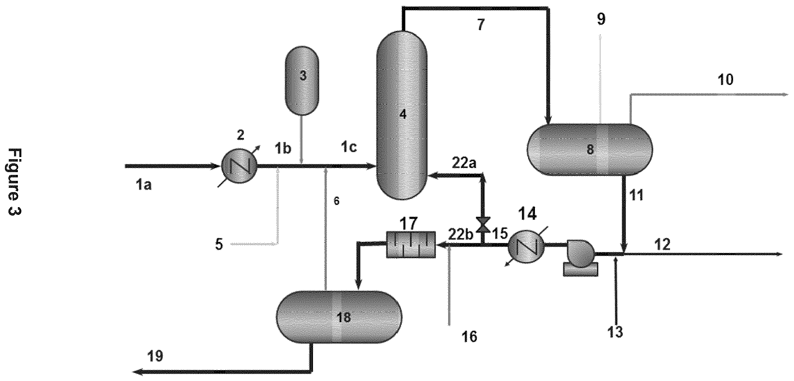

La figure 3 illustre une variante de la présente invention dans laquelle la ligne (21a) de recirculation de la solution alcaline partiellement régénérée est remplacée par une ligne (22a) jouant le même rôle, c'est-à-dire, renvoyant un excès de solution alcaline recirculé vers le réacteur d'oxydation (4) pour contrôler sa montée en température, et avec le même point de départ, mais dont le point d'arrivée est situé dans le réacteur d'oxydation (4) lui-même en un ou plusieurs points d'arrivée. Dans le cas où plusieurs points d'introduction sont utilisés, on peut optionnellement faire varier le débit d'excès de solution alcaline recirculé dans chacun des points selon une loi permettant de contrôler la montée en température tout au long du réacteur d'oxydation (4).

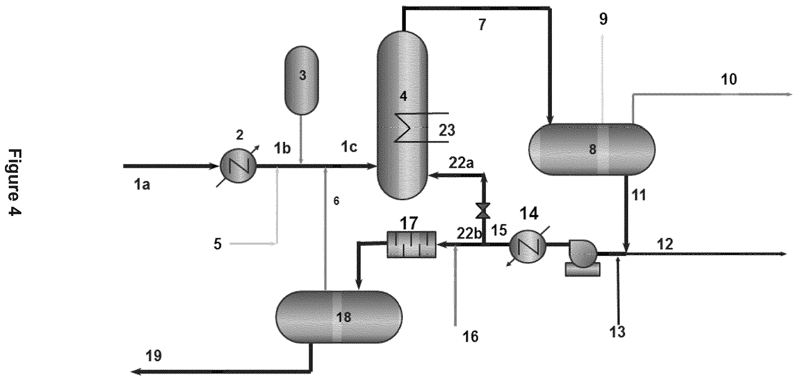

La figure 4 illustre une variante de la présente invention qui permet encore de réduire l'excès de solution alcaline recirculé utilisé pour contrôler la température dans le réacteur d'oxydation (4). En effet, en équipant ce réacteur d'un moyen de refroidissement supplémentaire, comme un échangeur (23) ou tout autre moyen équivalent, on peut encore réduire le débit d'excès de solution alcaline recirculé renvoyée vers le réacteur d'oxydation (4) par la ligne (22a), ou en amont du réacteur (4) par la ligne (21a), selon la variante choisie.

### EXEMPLES SELON L'INVENTION

L'invention sera mieux comprise à la lecture des exemples comparatifs qui suivent. On considère une unité d'extraction des mercaptans présents dans une phase hydrocarbure de type GPL, mélange d'alcanes à 2, 3, 4 et 5 atomes de carbone. La solution alcaline employée pour réaliser cette extraction est constituée par de la soude. La charge hydrocarbure à traiter provient d'une unité de distillation de condensats. Elle a un débit de 13,2 t/h et la composition donnée dans le tableau 1 ci-dessous:

**Tableau 1: Propriétés de la charge**

| Propriétés | | % pds |
|---|---|---|
| Ethane, | %pds | 0,3 |
| Propane, | %pds | 18,3 |
| Butane, | %pds | 77,2 |
| Pentane, | %pds | 2,2 |

| Impuretés | | |
|---|---|---|
| H₂S, | ppm pds | 50 00 |
| COS | ppm pds | 225 |
| methyl-mercaptans, | ppm pds | 90 00 |
| ethyl-mercaptans, | ppm pds | 56 25 |
| propyl-mercaptans, | ppm pds | 150 |

On considèrera pour les exemples que la charge, avant la section d'extraction, passe dans une section dite de prélavage qui permet d'éliminer totalement l'H2S et le COS.

Dans la section de lavage et dans le réacteur d'oxydation, on utilise une coupe hydrocarbonée constituée d'une coupe de type naphta désulfurisée dont les propriétés sont données dans le tableau 2 ci-dessous :

**Tableau 2: propriétés de la coupe hydrocarbonée utilisé dans la section de lavage**

| TBP | | °C |
|---|---|---|
| Temp.d'ébullition initiale | | 50 |
| 5 | | 74 |
| 10 | | 80 |
| 30 | | 103 |
| 50 | | 118 |
| 70 | | 136 |
| 90 | | 162 |
| 95 | | 175 |
| Temp. d'ébullition finale | | 198 |
| | | |
| Poids moléculaire, | kg/kmol | 110,6 |
| Densité, | kg/m³ | 730 |
| Soufre total, | ppm pds | < 5 |

Pour tous les exemples, le débit de soude régénérée (19) qui alimente la section d'extraction est de 3,9 t/h avec une teneur en soude de 15 % poids et à une température de 40°C. Après réaction avec les composés soufrés, la soude usée (1a) c'est-à-dire enrichie en composés soufrés, obtenue à la sortie de la section d'extraction (donc à l'entrée de la section de régénération) a une teneur en soude de 10,7% poids et un débit de 4,1 t/h.

Pour tous les exemples, la consommation de soude fraiche (13) est nulle, et la quantité de soude partiellement régénérée (12) purgée est nulle également (fonctionnement intermittent de l'appoint purge).

### Exemple 1 :

Cet exemple est selon l'art antérieur. Le procédé selon l'art antérieur est représenté par le schéma de la figure 1.

Un excès de soude recirculé de 9,1 t/h constitué de soude totalement régénérée à 40°C « bypassant » la section extraction par la ligne (20) est utilisé pour contrôler la montée en température dans le réacteur et obtenir une différence de température de 9°C entre l'entrée et la sortie du réacteur d'oxydation (4).

L'excès de soude « bypassant » la section d'extraction par la ligne (20) est mélangée avec la soude usée provenant de la section d'extraction (1a). Le mélange est ensuite chauffé à 45°C dans un échangeur (2) avant l'ajout d'air par la ligne (5) (0,2 t/h) et de catalyseur (3) puis entre dans le réacteur d'oxydation (4). La quantité de catalyseur injecté vise à maintenir une concentration en catalyseur de 250 ppm pds dans la solution alcaline qui rentre dans le réacteur.

Le réacteur d'oxydation (4) fonctionne à 0,59 MPa, en tête de réacteur. A la sortie du réacteur d'oxydation, la soude ne contient plus de thiolates de sodium et est saturée en oxygène dissous.

L'échangeur (2) servant à chauffer à 45°C le mélange soude usée et solution alcaline totalement régénérée consomme 70 kW et l'échangeur (14) de refroidissement de la soude partiellement régénérée, servant à la refroidir de 54°C à 40°C, consomme 200 kW.

Le débit de la coupe hydrocarbonée injecté par la conduite (16) en amont du ballon de lavage (18) et injecté par la suite dans le réacteur d'oxydation par la ligne (6) est de 1,6 t/h. La quantité de la coupe hydrocarbonée (10) riche en disulfures purgée est de 1,8 t/h.

Le flux entrant dans le réacteur d'oxydation, constitué de la soude à régénérer, de l'excès de soude totalement régénéré recirculé, et de la coupe hydrocarbonée a un débit de 15,0 t/h. Dans la section de lavage, le débit de soude (11) partiellement régénérée entrant dans la section de lavage est de 13,0 t/h.

### Exemple 2 :

Le procédé selon l'invention est simulé suivant le schéma décrit dans la figure 2.

Un excès de soude recirculé (21a) de 9,1 t/h, constitué par de la soude partiellement régénéré à 40°C, est envoyé dans le circuit en amont du réacteur d'oxydation (4) par la conduite (21a) pour contrôler la montée en température dans le réacteur d'oxydation (4) et obtenir une différence de température de 9°C entre l'entrée et la sortie du réacteur d'oxydation.

L'excès de soude recirculé (21a) est mélangé avec le flux qui entre dans le réacteur d'oxydation (4), constituée de soude usée préchauffée dans l'échangeur (2) avant l'ajout d'air par la ligne (5) (0,2 t/h) et de catalyseur (3). Le produit du mélange du flux (1c) et de l'excès de soude partiellement régénérée recirculé est introduit à 45°C dans le réacteur d'oxydation (4), dans les mêmes conditions de pression et température que l'exemple1.

L'échangeur (2) servant à chauffer la soude usée pour avoir une température de 45°C à l'entrée du réacteur d'oxydation (4) consomme 70 kW, et l'échangeur (14) de refroidissement de la soude partiellement régénérée, servant à la refroidir de 54°C à 40°C, consomme 200 kW, comme dans l'exemple 1.Le débit de la coupe hydrocarbonée injecté par la conduite (16) en amont du ballon de lavage (18) et envoyé par la suite vers le réacteur d'oxydation par la ligne (6) est de 0,5 t/h comparé à 1,6 t/h dans l'exemple 1. La quantité d'hydrocarbure type naphta (10) riche en disulfures purgée est de 0,7 t/h.

Le débit de soude partiellement régénérée dans la section de lavage (21b) est de 3,9 t/h au lieu de 13 t/h dans l'exemple 1. Ainsi, le débit de soude partiellement régénérée à traiter dans la section lavage et le débit d'hydrocarbure type naphtha associé sont réduits de 70 % comparé à l'exemple 1, ce qui réduit d'autant la taille des équipements de cette section et réduit l'inventaire de soude et de catalyseur de l'unité.

Le débit de soude et hydrocarbure circulant dans le réacteur d'oxydation et à l'entrée de la section de décantation est de 13,9 t/h. Ainsi le débit circulant dans cette section est réduit de 7% comparé à l'exemple 1.

### Exemple 3 :

Le procédé selon l'invention est simulé selon la variante décrite dans figure 3.

Le réacteur d'oxydation (4) fonctionne dans les mêmes conditions de pression et température que dans l'exemple 1.

La soude usée (1a) est chauffée à 45°C dans l'échangeur (2) avant l'ajout d'air par la ligne (5) (0,2 t/h) et de catalyseur (3), puis entre dans le réacteur d'oxydation par la conduite (1c).

Un excès de soude recirculé (22a) de 6,7 t/h, constitué par de la soude partiellement régénéré, est envoyé directement dans le réacteur d'oxydation pour contrôler la montée en température dans le réacteur et obtenir une différence de température de 9°C entre l'entrée et la sortie du réacteur d'oxydation (4).

L'échangeur (2) servant pour chauffer la soude usée à 45°C consomme 23 kW et l'échangeur de refroidissement (14) de la soude partiellement régénérée, servant à refroidir de 54°C à 40°C, consomme 161 kW. Le gain d'utilités pour les échangeurs de chaleur est de 33 % par rapport aux utilités consommées dans l'exemple 1.

Le débit de la coupe hydrocarbonée injecté par la conduite (16) en amont du ballon de lavage (18) et envoyé par la suite vers le réacteur d'oxydation par la ligne (6) est de 0,5 t/h, comparé à 1,6 t/h dans l'exemple 1. La quantité de coupe hydrocarbonée (10) riche en disulfures purgée est de 0,7 t/h.

Le débit de soude et d'hydrocarbure circulant dans le réacteur d'oxydation et à l'entrée du ballon séparateur (8) est de 11,5 t/h. Ainsi le débit circulant dans ces sections est réduit de 23% comparé au débit de l'exemple 1. La taille des équipements de ces sections est donc réduite de 23%, ce qui réduit l'inventaire de catalyseur et de solution alcaline de l'unité.

De plus, le débit de soude partiellement régénérée dans la section de lavage est de 3,9 t/h au lieu de 13 t/h dans l'exemple 1. Ainsi, le débit de soude partiellement régénérée à traiter dans la section lavage et le débit d'hydrocarbure type naphta associé sont réduits de 70 % comparé à l'exemple 1, ce qui réduit d'autant la taille des équipements de cette section.

### Exemple 4 :

Le procédé selon l'invention dans cette variante est représenté dans figure 4.

Un excès de soude recirculé, constitué de soude partiellement régénérée, par la conduite (22a) est fixé à 0,1 t/h.

La soude usée est chauffée à 45°C dans un échangeur (2) avant l'ajout d'air par la ligne (5) (0,2 t/h) et de catalyseur (3), puis entre dans le réacteur d'oxydation (4). L'échangeur (2) consomme 23 kW. Le réacteur d'oxydation (4) fonctionne dans les mêmes conditions de pression et température que dans l'exemple 1. Le réacteur d'oxydation est muni d'un serpentin (23) situé dans le réacteur d'oxydation (4) et alimenté en eau industrielle qui permet de refroidir le fluide procédé. Ce serpentin absorbe une quantité de chaleur de 99 kW.

L'utilisation du serpentin (23) et de l'excès de soude recirculé (22a) permet de contrôler la montée en température dans le réacteur et d'obtenir une différence de 9°C entre l'entrée et la sortie du réacteur, comme dans les exemples précédents.

Le débit de la coupe hydrocarbonée injectée par la conduite (16) en amont du ballon de lavage (18) et envoyée par la suite vers le réacteur d'oxydation par la ligne (6) est de 0,5 t/h comparé à 1,6 t/h dans l'exemple 1. La quantité de la coupe hydrocarbonée riche en disulfures purgée (10) est de 0,7 t/h.

Le débit de soude et d'hydrocarbure circulant dans le réacteur d'oxydation (4) et à l'entrée du ballon séparateur (8) est de 4,9 t/h. Ainsi le débit circulant dans ces sections est réduit de 67% comparé au débit de l'exemple 1, et de 57% comparé au débit de l'exemple 3. La taille des équipements de ces sections est donc réduite d'autant. L'inventaire de catalyseur et de solution alcaline de l'unité est réduit.

L'échangeur de refroidissement de la soude partiellement régénérée (14), servant à refroidir de 54°C à 40°C, consomme 61 kW.

Le gain d'utilités consommées dans les échangeurs de chaleur de l'unité est de 33 % par rapport aux utilités consommées dans l'exemple 1, et identique à celui de l'exemple 3.

De plus, le débit de soude partiellement régénérée dans la section de lavage est de 3,9 t/h au lieu de 13 t/h dans l'exemple1. Ainsi, le débit de soude partiellement régénérée à traiter dans la section de lavage et le débit d'hydrocarbure type naphta associé sont réduits de 70 % comparé à l'exemple 1, ce qui réduit d'autant la taille des équipements de cette section.

## Revendications

1. Procédé de régénération d'une solution alcaline usée utilisée dans une unité d'extraction des composés soufrés d'une coupe hydrocarbonée, comprenant la suite d'étapes suivantes :
a) On envoie la solution alcaline usée (1a) dans un réacteur d'oxydation (4) dans lequel elle est mise en contact avec un agent oxydant (5) et un catalyseur (3), ladite solution alcaline usée étant préalablement réchauffée à une température comprise entre 40°C et 50°C.
b) On envoie les effluents (7) du réacteur d'oxydation (4) dans un séparateur (8) duquel on extrait une phase hydrocarbure riche en disulfures (10), et une solution alcaline partiellement régénérée (11),
c) On refroidit la solution alcaline partiellement régénérée (11) issue de l'étape b) à une température inférieure ou égale à 45°C,
d) On divise la solution alcaline partiellement régénérée refroidie (15) à l'étape c) en deux flux :
- un flux constituant l'excès de solution alcaline recirculé qui est envoyé en amont (21a), ou directement (22a), dans le réacteur d'oxydation (4), et qui constitue le moyen de refroidissement utilisé pour contrôler la montée en température dudit réacteur, et,
- un flux (21b) ou (22b) qui poursuit le processus de régénération,
e) On mélange le flux (21b) ou (22b), issu de l'étape d) avec une coupe hydrocarbonée sans composés soufrés (16),
f) On envoie le mélange issu de l'étape e) dans un séparateur (18) duquel on extrait une solution alcaline totalement régénérée (19), et une coupe hydrocarbonée enrichie partiellement en disulfures (6).

2. Procédé de régénération d'une solution alcaline usée selon la revendication 1, dans lequel l'excès (21a) de solution alcaline recirculé est envoyé vers le réacteur d'oxydation (4), par le circuit en amont dudit réacteur d'oxydation (4), en mélange avec la solution alcaline usée (1a).

3. Procédé de régénération d'une solution alcaline usée selon la revendication 1, dans lequel l'excès (22a) de solution alcaline recirculé est renvoyé vers le réacteur d'oxydation (4), directement en un ou plusieurs points dudit réacteur d'oxydation (4).

4. Procédé de régénération d'une solution alcaline usée selon la revendication 3, dans lequel le ou les points d'introduction de l'excès de solution alcaline recirculé dans le réacteur d'oxydation (4) sont munis d'un moyen de diffusion ou d'un moyen de mélange.

5. Procédé de régénération d'une solution alcaline usée selon la revendication 3, dans lequel le ou les points d'introduction de l'excès de solution alcaline recirculé dans le réacteur d'oxydation (4) sont positionnés de façon à permettre de contrôler la montée en température du réacteur d'oxydation (4).

6. Procédé de régénération d'une solution alcaline usée selon la revendication 1, dans lequel le catalyseur employé dans le réacteur d'oxydation (4) est de type phtalocyanines de cobalt ou de vanadium.

7. Procédé de régénération d'une solution alcaline usée selon la revendication 1, dans lequel le catalyseur employé dans le réacteur d'oxydation (4) est ajouté dans la solution alcaline à l'entrée du réacteur d'oxydation (4), de manière à atteindre une concentration en catalyseur dans la solution alcaline comprise entre 10 et 1 000 ppm poids, préférentiellement entre 10 et 500 ppm poids.

8. Procédé de régénération d'une solution alcaline usée selon la revendication 1, dans lequel le réacteur d'oxydation (4) est équipé d'un moyen de refroidissement supplémentaire (23).

9. Procédé de régénération d'une solution alcaline usée selon la revendication 1, dans lequel l'excès de solution alcaline recirculé (21a) ou (22a) est refroidi à une température inférieure d'au moins 5°C à celle de la solution alcaline partiellement régénérée, avant d'être renvoyé vers le réacteur d'oxydation (4).

10. Procédé de régénération d'une solution alcaline usée selon la revendication 1, dans lequel la coupe hydrocarbonée à désulfurer peut aller du méthane au kérosène.

11. Installation de régénération d'une solution alcaline usée utilisée dans une unité d'extraction des composés soufrés d'une coupe hydrocarbonée, comprenant au moins :
- un équipement (2) permettant de chauffer la solution alcaline usée avant son introduction au réacteur d'oxydation à une température comprise entre 40°C et 50°C,
- un réacteur d'oxydation (4), dans lequel la solution alcaline usée est mise en contact avec un agent oxydant (5) et un catalyseur (3),
- un séparateur (8) alimenté par l'effluent issu du réacteur d'oxydation, duquel on extrait une phase hydrocarbure riche en disulfures (10) et une solution alcaline partiellement régénérée (11),
- un moyen de refroidissement (14) permettant de refroidir la solution alcaline partiellement régénérée (11) issue du séparateur (8) à une température inférieure ou égale à 45°C,
- un moyen permettant la division en deux flux de la solution alcaline partiellement régénérée refroidie (15):
- un premier flux constituant l'excès de solution alcaline recirculé qui est envoyé en amont (21a), ou directement (22a), dans le réacteur d'oxydation (4), et,
- un second flux (21b) ou (22b) qui poursuit le processus de régénération,
- un moyen de refroidissement constitué par l'excès de solution alcaline recirculé qui est envoyé en amont (21a), ou directement (22a), dans le réacteur d'oxydation (4).
- un moyen de mélange du flux (21b) ou (22b), avec une coupe hydrocarbonée sans composés soufrés (16),
- un séparateur (18) alimenté par le mélange duquel on extrait une solution alcaline totalement régénérée (19), et une coupe hydrocarbonée enrichie partiellement en disulfures (6).

12. Installation de régénération de solution alcaline usée selon la revendication 11, dans laquelle le réacteur d'oxydation est équipé d'un moyen de refroidissement supplémentaire (23),

13. Installation de régénération de solution alcaline usée selon la revendication 11, dans laquelle un moyen de refroidissement supplémentaire permet de refroidir l'excès de solution alcaline recirculé (21a) ou (22a) à une température inférieure d'au moins 5°C à celle de la solution alcaline partiellement régénérée refroidie (15).

## Patentansprüche

1. Verfahren zum Regenerieren einer gebrauchten Alkalilösung, die in einer Einheit zur Extraktion der Schwefelverbindungen aus einem Kohlenwasserstoffschnitt verwendet wird, umfassend die Abfolge der folgenden Schritte:
a) Schicken der gebrauchten Alkalilösung (1a) in einen Oxidationsreaktor (4), in dem sie mit einem Oxidationsmittel (5) und einem Katalysator (3) in Kontakt gebracht wird, wobei die gebrauchte Alkalilösung vorher wieder auf eine Temperatur zwischen 40 °C und 50 °C erhitzt wird,
b) Schicken der Abflüsse (7) aus dem Oxidationsreaktor (4) in einen Separator (8), aus dem eine an Disulfiden reiche Kohlenwasserstoffphase (10) und eine teilweise regenerierte Alkalilösung (11) extrahiert werden,
c) Kühlen der teilweise regenerierten Alkalilösung (11) aus dem Schritt b) auf eine Temperatur kleiner oder gleich 45 °C,
d) Teilen der in Schritt c) gekühlten, teilweise regenerierten Alkalilösung (15) in zwei Ströme:
- einen Strom, der den rückgeführten Alkalilösungsüberschuss darstellt, der stromaufwärts (21a) oder direkt (22a) in den Oxidationsreaktor (4) geschickt wird, und der das Kühlmittel darstellt, das verwendet wird, um den Temperaturanstieg des Reaktors zu kontrollieren, und
- einen Strom (21b), oder (22b), der den Regenerierungsprozess fortführt.
e) Mischen des aus dem Schritt d) stammenden Stroms (21b) oder (22b) mit einem Kohlenwasserstoffschnitt ohne Schwefelverbindungen (16),
f) Schicken des Gemisches aus dem Schritt e) in einen Separator (18), aus dem eine vollständig regenerierte (19) Alkalilösung und ein teilweise mit Disulfiden angereicherter Kohlenwasserstoffschnitt (6) extrahiert wird.

2. Verfahren zum Regenerieren einer gebrauchten Alkalilösung nach Anspruch 1, bei dem der rückgeführte Alkalilösungsüberschuss (21a) im Gemisch mit der gebrauchten Alkalilösung (1a) durch die Leitungen stromaufwärts des Oxidationsreaktors (4) geschickt wird.

3. Verfahren zum Regenerieren einer gebrauchten Alkalilösung nach Anspruch 1, bei dem der rückgeführte Alkalilösungsüberschuss (22a) zum Oxidationsreaktor (4) direkt an einen oder mehreren Punkten des Oxidationsreaktors (4) zurückgeschickt wird.

4. Verfahren zum Regenerieren einer gebrauchten Alkalilösung nach Anspruch 3, bei dem der oder die Einleitungspunkte des rückgeführten Alkalilösungsüberschusses in den Oxidationsreaktor (4) mit einem Verteilungsmittel oder einem Mischmittel versehen sind.

5. Verfahren zum Regenerieren einer gebrauchten Alkalilösung nach Anspruch 3, bei dem der oder die Einleitungspunkte des rückgeführten Alkalilösungsüberschusses in den Oxidationsreaktor (4) derart positioniert sind, dass sie es ermöglichen, den Temperaturanstieg des Oxidationsreaktors (4) zu kontrollieren.

6. Verfahren zum Regenerieren einer gebrauchten Alkalilösung nach Anspruch 1, bei dem der in dem Oxidationsreaktor (4) eingesetzte Katalysator vom Typ Kobalt- oder Vanadium-Phthalocyanin ist.

7. Verfahren zum Regenerieren einer gebrauchten Alkalilösung nach Anspruch 1, bei dem der in dem Oxidationsreaktor (4) eingesetzte Katalysator in die Alkalilösung am Eingang des Oxidationsreaktors (4) hinzugefügt wird, um eine Katalysatorkonzentration in der Alkalilösung zwischen 10 und 1000 Gew.-ppm, vorzugsweise zwischen 10 und 500 Gew.-ppm, zu erreichen.

8. Verfahren zum Regenerieren einer gebrauchten Alkalilösung nach Anspruch 1, bei dem der Oxidationsreaktor (4) mit einem zusätzlichen Kühlmittel (23) ausgestattet ist.

9. Verfahren zum Regenerieren einer gebrauchten Alkalilösung nach Anspruch 1, bei dem der rückgeführte Alkalilösungsüberschuss (21a) oder (22a) auf eine Temperatur um mindestens 5 °C unter jener der teilweise regenerierten Alkalilösung gekühlt wird, bevor er wieder zum Oxidationsreaktor (4) zurückgeschickt wird.

10. Verfahren zum Regenerieren einer gebrauchten Alkalilösung nach Anspruch 1, bei dem der zu entschwefelnde Kohlenwasserstoffschnitt von Methan bis zu Kerosin gehen kann.

11. Anlage zum Regenerieren einer gebrauchten Alkalilösung, die in einer Einheit zur Extraktion der Schwefelverbindungen aus einem Kohlenwasserstoffschnitt verwendet wird, mindestens umfassend:
- eine Ausrüstung (2), die es ermöglicht, die gebrauchte Alkalilösung vor ihrer Einleitung in den Oxidationsreaktor auf eine Temperatur zwischen 40 °C und 50 °C zu erhitzen,
- einen Oxidationsreaktor (4), in dem die gebrauchte Alkalilösung mit einem Oxidationsmittel (5) und einem Katalysator (3) in Kontakt gebracht wird,
- einen Separator (8), der mit dem aus dem Oxidationsreaktor kommenden Abfluss versorgt wird, aus dem eine an Disulfiden reiche Kohlenwasserstoffphase (10) und eine teilweise regenerierte Alkalilösung (11) extrahiert werden,
- ein Kühlmittel (14), das es ermöglicht, die teilweise regenerierte Alkalilösung (11) aus dem Separator (8) auf eine Temperatur kleiner oder gleich 45 °C zu kühlen,
- ein Mittel, das die Teilung der gekühlten teilweise regenerierten Alkalilösung (15) in zwei Ströme ermöglicht,
- einen ersten Strom, der den rückgeführten Alkalilösungsüberschuss darstellt, der stromaufwärts (21a) des oder direkt (22a) in den Oxidationsreaktor (4) geschickt wird, und
- einen zweiten Strom (21b) oder (22b), der den Regenerierungsprozess fortführt,
- ein Kühlmittel, das von dem rückgeführten Alkalilösungsüberschuss gebildet ist, der stromaufwärts (21a) oder direkt (22a) in den Oxidationsreaktor (4) geschickt wird,
- ein Mittel zum Mischen des Stroms (21b) oder (22b) mit einem Kohlenwasserstoffschnitt ohne Schwefelverbindungen (16),
- einen Separator (18), der mit dem Gemisch versorgt wird, aus dem eine vollständig regenerierte Alkalilösung (19) und ein teilweise mit Disulfiden angereicherter Kohlenwasserstoffschnitt (6) extrahiert werden.

12. Anlage zum Regenerieren einer gebrauchten Alkalilösung nach Anspruch 11, bei der der Oxidationsreaktor mit einem zusätzlichen Kühlmittel (23) ausgestattet ist.

13. Anlage zum Regenerieren einer gebrauchten Alkalilösung nach Anspruch 11, bei der es ein zusätzliches Kühlmittel ermöglicht, den rückgeführten Alkalilösungsüberschuss (21a) oder (22a) auf eine Temperatur um mindestens 5 °C unter jener der gekühlten teilweise regenerierten Alkalilösung (15) zu kühlen.

## Claims

1. Process for the regeneration of a used alkaline solution utilized in a unit for the extraction of the sulphur-containing compounds from a hydrocarbon-containing cut, comprising the following sequence of steps:
a) Sending the used alkaline solution (1a) into an oxidation reactor (4) in which it is brought into contact with an oxidizing agent (5) and a catalyst (3), said used alkaline solution being heated beforehand to a temperature comprised between 40°C and 50°C.
b) Sending the effluents (7) of the oxidation reactor (4) into a separator (8) from which a hydrocarbon phase rich in disulphides (10), and a partially regenerated alkaline solution (11) are extracted,
c) Cooling the partially regenerated alkaline solution (11) originating from step b) to a temperature less than or equal to 45°C,
d) Dividing the partially regenerated alkaline solution (15) cooled in step c) into two flows:
- a flow constituting the excess of recirculated alkaline solution which is sent upstream (21a), or directly (22a), into the oxidation reactor (4), and which constitutes the cooling means used to control the rise in temperature of said reactor, and,
- a flow (21b) or (22b) which continues the regeneration process,
e) Mixing the flow (21b) or (22b), originating from step d) with a hydrocarbon-containing cut without sulphur-containing compounds (16),
f) Sending the mixture originating from step e) into a separator (18) from which a totally regenerated alkaline solution (19), and a hydrocarbon-containing cut partially enriched with disulphides (6) are extracted.

2. Process for the regeneration of a used alkaline solution according to claim 1, in which the excess (21a) of recirculated alkaline solution is sent to the oxidation reactor (4), via the circuit upstream of said oxidation reactor (4), in a mixture with the used alkaline solution (1a).

3. Process for the regeneration of a used alkaline solution according to claim 1, in which the excess (22a) of recirculated alkaline solution is sent to the oxidation reactor (4), directly to one or more points of said oxidation reactor (4).

4. Process for the regeneration of a used alkaline solution according to claim 3, in which the point or points of introduction of the excess of recirculated alkaline solution into the oxidation reactor (4) are provided with a diffusion means or a mixing means.

5. Process for the regeneration of a used alkaline solution according to claim 3, in which the point or points of introduction of the excess of recirculated alkaline solution into the oxidation reactor (4) are positioned so as to allow control of the rise in temperature of the oxidation reactor (4).

6. Process for the regeneration of a used alkaline solution according to claim 1, in which the catalyst employed in the oxidation reactor (4) is of cobalt or vanadium phthalocyanines type.

7. Process for the regeneration of a used alkaline solution according to claim 1, in which the catalyst employed in the oxidation reactor (4) is added to the alkaline solution at the inlet of the oxidation reactor (4), so as to achieve a concentration of catalyst in the alkaline solution comprised between 10 and 1,000 ppm by weight, preferentially between 10 and 500 ppm by weight.

8. Process for the regeneration of a used alkaline solution according to claim 1, in which the oxidation reactor (4) is equipped with an additional cooling means (23).

9. Process for the regeneration of a used alkaline solution according to claim 1, in which the excess of recirculated alkaline solution (21a) or (22a) is cooled to a temperature at least 5°C less than that of the partially regenerated alkaline solution, before being sent to the oxidation reactor (4).

10. Process for the regeneration of a used alkaline solution according to claim 1, in which the hydrocarbon-containing cut to be desulphurized can range from methane to kerosene.

11. Installation for the regeneration of a used alkaline solution utilized in a unit for the extraction of the sulphur-containing compounds from a hydrocarbon-containing cut, according to the invention, comprising at least:
- an item of equipment (2) making it possible to heat the used alkaline solution, before its introduction into the oxidation reactor to a temperature comprised between 40°C and 50°C,
- an oxidation reactor (4), in which the used alkaline solution is brought into contact with an oxidizing agent (5) and a catalyst (3),
- a separator (8) supplied with the effluent originating from the oxidation reactor (4), from which a hydrocarbon phase rich in disulphides (10), and a partially regenerated alkaline solution (11) are extracted,
- a cooling means (14) making it possible to cool the partially regenerated alkaline solution (11) originating from the separator (8) to a temperature less than or equal to 45°C,
- a means making it possible to divide the cooled partially regenerated alkaline solution (15) into two flows:
- a first flow constituting the excess of recirculated alkaline solution which is sent upstream (21a), or directly (22a), into the oxidation reactor (4), and,
- a second flow (21b) or (22b) which continues the regeneration process
- a cooling means constituted by the excess of recirculated alkaline solution which is sent upstream (21a), or directly (22a), into the oxidation reactor (4),
- a means of mixing the flow (21b) or (22b), with a hydrocarbon-containing cut without sulphur-containing compounds (16),
- a separator (18) supplied with the mixture, from which a totally regenerated alkaline solution (19), and a hydrocarbon-containing cut partially enriched with disulphides (6) are extracted.

12. Installation for the regeneration of used alkaline solution according to claim 11, in which the oxidation reactor is equipped with an additional cooling means (23).

13. Installation for the regeneration of used alkaline solution according to claim 11, in which an additional cooling means makes it possible to cool the excess of recirculated alkaline solution (21a) or (22a) to a temperature at least 5°C less than that of the cooled partially regenerated alkaline solution (15).
